(19) Europäisches Patentamt
European Patent Office
Office européen des brevets

(11) EP 1 834 992 A1

(12) EUROPEAN PATENT APPLICATION
published in accordance with Art. 158(3) EPC

(43) Date of publication:
19.09.2007 Bulletin 2007/38

(21) Application number: 05819885.4

(22) Date of filing: 22.12.2005

(51) Int Cl.:
*C08L 65/00* (2006.01) *C08L 57/06* (2006.01)
*G02B 5/30* (2006.01) *G02F 1/13363* (2006.01)

(86) International application number:
PCT/JP2005/023604

(87) International publication number:
WO 2006/070687 (06.07.2006 Gazette 2006/27)

(84) Designated Contracting States:
AT BE BG CH CY CZ DE DK EE ES FI FR GB GR HU IE IS IT LI LT LU LV MC NL PL PT RO SE SI SK TR

(30) Priority: 28.12.2004 JP 2004381944

(71) Applicant: JSR Corporation
Tokyo 104-0045 (JP)

(72) Inventors:
- MIYAMOTO, Yoshikazu
Tokyo 1040045 (JP)
- KAJIWARA, Ichiro
Tokyo 1040045 (JP)
- KAWASHIMA, Naoyuki
Tokyo 1040045 (JP)
- MIYAKI, Nobuyuki
Tokyo 1040045 (JP)

(74) Representative: TBK-Patent
Bavariaring 4-6
80336 München (DE)

# (54) THERMOPLASTIC RESIN COMPOSITION AND OPTICAL FILMS MADE THEREFROM

(57) The thermoplastic resin composition of the present invention comprises (A) a cycloolefin-based polymer and (B) a vinyl-based polymer having a polar group, has a glass transition temperature of not lower than 100°C and has a difference in glass transition temperature between the polymers (A) and (B) of less than 50°C. The optical film of the present invention comprises the thermoplastic resin composition of the invention. According to the present invention, it is possible to improve development of retardation at a low stress in the film stretching while retaining excellent heat resistance and optical properties and maintaining wavelength dispersion properties. The optical film of the invention exhibits properties that the dependence of retardation of a transmitted light on wavelength, said retardation being obtained by stretch orientation of the film, becomes larger as the wavelength becomes longer (positive wavelength dispersion properties), has low water absorption and low coefficient of photoelasticity, and is excellent in adhesion or bonding properties to other materials.

EP 1 834 992 A1

**Description**

TECHNICAL FIELD

The present invention relates to a thermoplastic resin composition comprising a cycloolefin-based resin and a vinyl-based polymer having a polar group, and an optical film comprising the resin composition. More particularly, the present invention relates to a thermoplastic resin composition which comprises a cycloolefin-based resin and a vinyl-based polymer having a polar group and is suitable for forming a film or the like, and an optical film comprising the resin composition, such as a retardation film.

BACKGROUND ART

Cycloolefin-based ring-opened (co)polymers have merits such that they have high glass transition temperatures attributable to rigidity of the main chain structure, they are amorphous and have high light transmittance because a bulky group is present in the main chain structure, and they exhibit low birefringence due to small anisotropy of birefringence. With these merits, they have been paid attention as transparent thermoplastic resins of excellent heat resistance, transparency and optical properties.
Taking advantage of the above features, application of the cycloolefin-based resins is being studied in fields of, for example, electron/optical materials, such as optical discs, optical lenses, optical fibers, transparent plastic substrates, low dielectric materials, retardation films, protective films of polarizing plates and substrates for liquid crystal displays, and sealing materials for optical semiconductor sealing.
If films obtained by film production from the cycloolefin-based resins are stretch-oriented, retardation films that give uniform and stable retardation to a transmitted light are formed. Regarding the function of the stretch-oriented films to give retardation (birefringence) to a transmitted light, however, the retardation films generally reduce the absolute value of retardation (birefringence) of the transmitted light as the wavelength of a transmitted light becomes longer (also referred to as "negative wavelength dependence" hereinafter).
On this account, it is extremely difficult to obtain a retardation film having a function to give retardation of 1/4 wavelength to a transmitted light in the whole visible region (400 to 800 nm), which is required for, for example, reflection type or semi-transmission type liquid crystal displays or optical disc pickups. Further, in order to obtain a retardation film having a function to give retardation of 1/2 wavelength to a transmitted light, which is required for, for example, liquid crystal projectors, it is necessary to laminate films in case of the conventional cycloolefin-based resin. For lamination of films, the process comprising putting the films together, cutting them, bonding them, etc. is made complicated, and besides, the film thickness of the resulting optical film becomes large, so that thinning of retardation films that has been desired in recent years is difficult.
On the other hand, for liquid crystal TV apparatuses using transmission type liquid crystal displays (particularly VA (vertically aligned) mode), high resolution displaying with a wide angle of field and high luminance is required more than ever, as the sizes of the displays are increased. In the transmission type liquid crystal display in which two polarizing plates are used under the crossed-Nicols condition (the condition where transmission axes of the polarizing plates meet at right angles), if the position at which the display is observed is changed to the oblique direction from the front of the display, the angle between the transmission axes of the two polarizing plates seemingly deviates from 90 degrees. Therefore, there occur problems such as light leakage and decoloring (coloring) in the black display. In order to solve such problems, various retardation films are interposed between the liquid crystal cell and each polarizing plate to compensate for dependence of the polarizing plate on an angle of field, but satisfactory quality has not been obtained yet.
In order to solve the problems, optical films exhibiting properties that as the wavelength of a transmitted light becomes longer, the absolute value of retardation of the transmitted light becomes larger (also referred to as "positive wavelength dependence" hereinafter) are necessary. As the optical films exhibiting such positive wavelength dependence, a retardation film comprising a specific cellulose acetate-based resin, a retardation film comprising a polycarbonate-based resin, a retardation film comprising a thermoplastic resin containing a cycloolefin-based resin and a styrene-based resin, etc. are proposed in Japanese Patent Laid-Open Publication No. 137116/2000, Japanese Patent Laid-Open Publication No. 337222/2001 and "Japanese Journal of Polymer Science and Technology", Vol. 61, No. 1, 89-94 (2004).
However, the film comprising the cellulose acetate-based resin has a problem of property change due to water absorption, and problems in heat resistance and the like. In the case of the polycarbonate-based resin, stretching at a high temperature is necessary because the resin has a high glass transition temperature, and moreover, the film of the resin suffers optical strain due to stress because the film has a high coefficient of photoelasticity. In the case of the thermoplastic resin composition containing the cycloolefin-based resin and the styrene-based resin, phase separation is liable to occur in the film formation and it is difficult to obtain a film of high transparency, though the film of the resin composition is excellent in water absorption and coefficient of photoelasticity. Further, when the resulting film is stretch-oriented, there arises a problem that the stretching becomes difficult, such as increased stress or uneven stress in the

stretching. If the stretching temperature is raised to decrease the stress, relaxation of stretch orientation takes place, and hence, there is a fear of lowering optical properties such as development of retardation or dispersion of wavelength.

DISCLOSURE OF THE INVENTION

PROBLEM TO BE SOLVED BY THE INVENTION

The present invention is intended to solve such problems as described above, and it is a first object of the invention to provide a thermoplastic resin composition and an optical film each of which can be improved in development of retardation at a low stress in the film stretching while maintaining wavelength dispersion properties. It is a second object of the invention to provide a retardation film having resistance to heat of not lower than 100°C, low water absorption and low coefficient of photoelasticity and exhibiting positive wavelength dispersion properties.

MEANS TO SOLVE THE PROBLEM

The thermoplastic resin composition of the present invention comprises (A) a cycloolefin-based polymer and (B) a vinyl-based polymer having a polar group, has a glass transition temperature of not lower than 100°C and has a difference in glass transition temperature between the polymers (A) and (B) of less than 50°C.
In the thermoplastic resin composition of the invention, the vinyl-based polymer (B) having a polar group is preferably contained in an amount of 20 to 200 parts by weight based on 100 parts by weight of the cycloolefin-based polymer (A).
In the thermoplastic resin composition of the invention, the cycloolefin-based polymer (A) is preferably a polymer obtained by polymerization or copolymerization of the compound represented by the following formula (I):
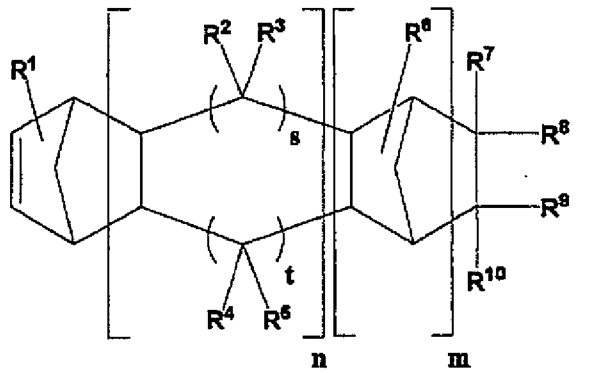

(I)

wherein m, n, s and t are each independently an integer of 0 to 2,
$R^1$, $R^2$, $R^3$, $R^4$, $R^5$ and $R^6$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group,
$R^7$, $R^8$, $R^9$ and $R^{10}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, they may be bonded to each other to form a monocyclic or polycyclic group which may have a hetero atom, and $R^7$ and $R^8$, or $R^9$ and $R^{10}$ may be united to form a divalent hydrocarbon group.
In the thermoplastic resin composition of the invention, the cycloolefin-based polymer (A) preferably has a structural unit represented by the following formula (II):
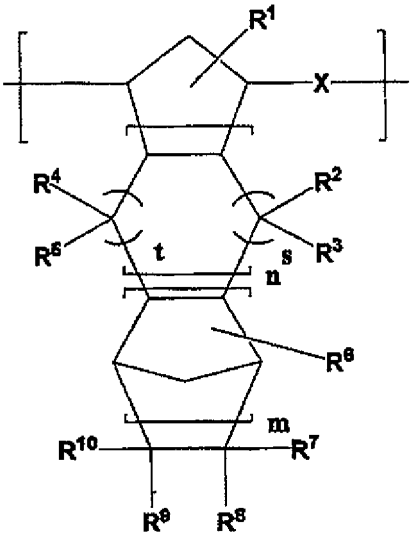

(II)

wherein $R^1$, $R^2$, $R^3$ $R^4$, $R^5$, $R^6$ $R^7$ $R^8$ $R^9$ $R^{10}$, m, n, s and t have the same meanings as in the formula (I), X is a group represented by the formula -CH=CH- or a group represented by the formula $-CH_2CH_2-$, and plural X may be the same or different.
In the thermoplastic resin composition of the invention, the vinyl-based polymer (B) having a polar group preferably has, as the polar group, at least one group selected from a hydroxyl group and an acid anhydride group.
In the thermoplastic resin composition of the invention, the vinyl-based polymer (B) having a polar group preferably has a structural unit derived from an aromatic vinyl-based monomer.
The optical film of the present invention comprises a thermoplastic resin composition comprising (A) a cycloolefin-based polymer and (B) a vinyl-based polymer having a polar group, having a glass transition temperature of not lower than 100°C and having a difference in glass transition temperature between the polymers (A) and (B) of less than 50°C.
The optical film of the invention is preferably a retardation film obtained by forming the thermoplastic resin composition into a film and stretch-orienting the film.

## EFFECT OF THE INVENTION

According to the present invention, by controlling the glass transition temperatures of all the polymers to not lower than 100°C and controlling a difference in glass transition temperature between the polymers to less than 50°C in the thermoplastic resin composition comprising a cycloolefin-based polymer and a vinyl-based polymer having a polar group, development of retardation can be improved at a low stress in the film stretching while retaining excellent heat resistance and optical properties and maintaining wavelength dispersion properties. Further, the film obtained from the thermoplastic resin composition of the invention increases the dependence of retardation of a transmitted light on wavelength, said retardation being obtained by stretch orientation, as the wavelength becomes longer (positive wavelength dispersion properties), has low water absorption and low coefficient of photoelasticity, and is excellent in adhesion or bonding properties to other materials.
Accordingly, when the optical film of the invention is used as a retardation film, a $\lambda$ plate exhibiting a fixed retardation in the wavelength region of 400 to 800 nm can be realized by one retardation film. Moreover, the optical film.of the invention is useful as an optical film having functions of light diffusion, transparent conductivity, antireflection and the like.

## BRIEF DESCRIPTION OF THE DRAWINGS

Fig. 1 is a schematic view relating to a method for calculation of the glass transition temperature (Tg) in the present invention.
Fig. 2 is a view showing comparison of stress and development of retardation in the stretching between the retardation films obtained in Example 3, Example 4 and Comparative Example 2.

BEST MODE FOR CARRYING OUT THE INVENTION

The thermoplastic resin composition of the invention comprises (A) a cycloolefin-based polymer and (B) a vinyl-based polymer having a polar group.

(A) Cycloolefin-based polymer

As the cycloolefin-based polymer (A) for use in the invention, there can be mentioned the following polymers (i) to (iv):

(i) a ring-opened polymer of a monomer represented by the following formula (I) (also referred to as a "specific monomer" hereinafter),
(ii) a ring-opened copolymer of the specific monomer and a copolymerizable monomer,
(iii) a hydrogenated polymer of the ring-opened polymer (i) or (ii),
(iv) a polymer obtained by cyclizing the ring-opened polymer (i) or (ii) by Friedel-Crafts reaction and then hydrogenating the reaction product, and
(v) a saturated copolymer of the specific monomer and an unsaturated double bond-containing compound.

Of the above polymers, the hydrogenation product (iii) of the ring-opened polymer is preferable.
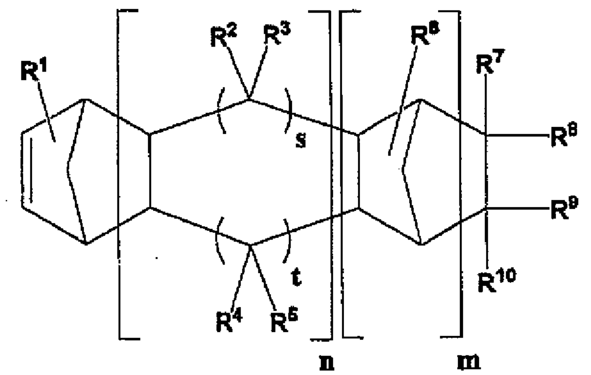

(I)

In the above formula, s and t are each independently 0 or 1 with the proviso that at least one of them is 1, n and m are each independently an integer of 0 to 2, $R^1$ to $R^9$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^7$ and $R^8$, and/or $R^9$ and $R^{10}$ may be united to form a hydrocarbon group, and $R^7$ or $R^8$, and $R^9$ or $R^{10}$ may be bonded to each other to form a carbon ring or a heterocyclic ring (said carbon ring or said heterocyclic ring may have a monocyclic structure or may be condensed with another ring to form a polycyclic structure).
Examples of the halogen atoms include a fluorine atom, a chlorine atom and a bromine atom.
Examples of the hydrocarbon groups of 1 to 30 carbon atoms include alkyl groups, such as methyl, ethyl and propyl; cycloalkyl groups, such as cyclopentyl and cyclohexyl; and alkenyl groups, such as vinyl, allyl and propenyl.
The above substituted or unsubstituted hydrocarbon group may be directly bonded to a ring structure, or may be bonded thereto through a linkage. The linkage is, for example, a divalent hydrocarbon group of 1 to 10 carbon atoms (e.g., alkylene group represented by the formula - $(CH_2)_m$- wherein m is an integer of 1 to 10), or a linkage containing oxygen, nitrogen, sulfur or silicon (e.g., carbonyl group (-CO-), oxycarbonyl group (-O(CO)-), sulfone group (-$SO_2$-), ether bond (-O-), thioether bond (-S-), imino group (-NH-), amide bond (-NHCO-, -CONH-) or siloxane bond (-OSi(R)-, wherein R is an alkyl group such as methyl or ethyl)). A linkage containing two or more of the above groups and bonds is also available.
Examples of the polar groups include a hydroxyl group, an alkoxy group of 1 to 10 carbon atoms, a carbonyloxy group, an alkoxycarbonyl group, an aryloxycarbonyl group, a cyano group, an amide group, an imide group, a triorganosiloxy group, a triorganosilyl group, an amino group, an acyl group, an alkoxysilyl group, a sulfonyl group and a carboxyl group. Specific examples of the alkoxy groups include methoxy and ethoxy; specific examples of the carbonyloxy groups include alkylcarbonyloxy groups, such as acetoxy and propionyloxy, and arylcarbonyloxy groups, such as benzoyloxy; specific examples of the alkoxycarbonyl groups include methoxycarbonyl and ethoxycarbonyl; specific examples of the

aryloxycarbonyl groups include phenoxycarbonyl, naphthyloxycarbonyl, fluorenyloxycarbnyl and biphenylyloxycarbonyl; specific examples of the triorganosiloxy groups include trimethylsiloxy and triethylsiloxy; specific examples of the triorganosilyl groups include trimethylsilyl and triethylsilyl; specific examples of the amino groups include primary amino group; and specific examples of the alkoxysilyl groups include trimethoxysilyl and triethoxysilyl.

Specific monomer

Examples of the specific monomers represented by the formula (I) include the following compounds:

bicyclo[2.2.1]hept-2-ene,
tricyclo [4.3.0.$1^{2,5}$]-3-decene,
tricyclo [4.4.0.$1^{2,5}$]-3-undecene,
tetracyclo [4.4.0.$1^{2,5}$.$1^{7,10}$] -3-dodecene,
pentacyclo [6.5.1.$1^{3,6}$.$0^{2,7}$.$0^{9,13}$] -4-pentadecene,
pentacyclo[7.4.0.$1^{2,5}$.$1^{9,12}$.$0^{8,13}$]-3-pentadecene,
5-methylbicyclo[2.2.1]hept-2-ene,
5-ethylbicyclo[2.2.1]hept-2-ene,
5-methoxycarbonylbicyclo[2.2.1]hept-2-ene,
5-methyl-5-methoxycarbonylbicyclo[2.2.1]hept-2-ene,
5-cyanobicyclo[2.2.1]hept-2-ene,
8-methoxycarbonyltetracyclo[4.4.0.$1^{2,5}$.$1^{7,10}$]-3-dodecene,
8-ethoxycarbonyltetracyclo[4.4.0.$1^{2,5}$.$1^{7,10}$]-3-dodecene,
8-n-propoxycarbonyltetracyclo[4.4.0.$1^{2,5}$.$1^{7,10}$]-3-dodecene,
8-isopropoxycarbonyltetracyclo[4.4.0.$1^{2,5}$.$1^{7,10}$]-3-dodecene,
8-n-butoxycarbonyltetracyclo[4.4.0.$1^{2,5}$.$1^{7,10}$]-3-dodecene,
8-phenoxycarbonyltetracyclo[4.4.0.$1^{2,5}$.$1^{7,10}$]-3-dodecene,
8-(1-naphthoxy)carbonyltetracyclo[4.4.0.$1^{2,5}$.$1^{7,10}$]-3-dodecene,
8-(2-naphthoxy)carbonyltetracyclo[4.4.0.$1^{2,5}$.$1^{7,10}$]-3-dodecene,
8-(4-phenylphenoxy)carbonyltetracyclo[4.4.0.$1^{2,5}$.$1^{7,10}$]-3-dodecene,
8-methyl-8-methoxycarbonyltetracyclo[4.4.0.$1^{2,5}$.$1^{7,10}$]-3-dodecene,
8-methyl-8-ethoxycarbonyltetracyclo[4.4.0.$1^{2,5}$.$1^{7,10}$]-3-dodecene,
8-methyl-8-n-propoxycarbonyltetracyclo[4.4.0.$1^{2,5}$.$1^{7,10}$]-3-dodecene,
8-methyl-8-isopropoxycarbonyltetracyclo[4.4.0.$1^{2,5}$.$1^{7,10}$]-3-dodecene,
8-methyl-8-n-butoxycarbonyltetracyclo[4.4.0.$1^{2,5}$.$1^{7,10}$]-3-dodecene,
8-methyl-8-phenoxycarbonyltetracyclo[4.4.0.$1^{2,5}$.$1^{7,10}$]-3-dodecene,
8-methyl-8-(1-naphthoxy)carbonyltetracyclo[4.4.0.$1^{2,5}$.$1^{7,10}$]-3-dodecene,
8-methyl-8-(2-naphthoxy)carbonyltetracyclo[4.4.0.$1^{2,5}$.$1^{7,10}$]-3-dodecene,
8-methyl-8-(4-phenylphenoxy)carbonyltetracyclo[4.4.0.$1^{2,5}$.$1^{7,10}$]-3-dodecene,
pentacyclo[8.4.0.$1^{2,5}$.$1^{9,12}$.$0^{8,13}$]-3-hexadecene,
heptacyclo[8.7.0.13,*6*.110,17.$1^{12,15}0^{2,7}$.$0^{11,16}$]-4-eicosene,
heptacyclo [8.8.0.$1^{4,7}$.$1^{11,18}$.$1^{13,16}$.$0^{3,8}$.$0^{12,17}$]-5-heneicosene,
5-ethylidenebicyclo[2.2.1]hept-2-ene,
8-ethylidenetetracyclo [4.4.0.$1^{2,5}$.$1^{7,10}$] -3-dodecene,
5-phenylbicyclo[2.2.1]hept-2-ene,
5-phenyl-5-methylbicyclo[2.2.1]hept-2-ene,
8-phenyltetracyclo [4.4.0.$1^{2,5}$.$1^{7,10}$] -3-dodecene,
5-n-butylbicyclo [2.2.1]hept-2-ene,
5-n-hexylbicyclo[2.2.1]hept-2-ene,
5-cyclohexylbicyclo[2.2.1]hept-2-ene,
5-(2-cyclohexenyl)bicyclo[2.2.1]hept-2-ene,
5-n-octylbicyclo[2.2.1]hept-2-ene,
5-n-decylbicyclo[2.2.1]hept-2-ene,
5-isopropylbicyclo[2.2.1]hept-2-ene,
5-(1-naphthyl)bicyclo[2.2.1]hept-2-ene,
5-(2-naphthyl)bicyclo[2.2.1]hept-2-ene,
5-(2-naphthyl)-5-methylbicyclo[2.2.1]hept-2-ene,
5-(4-biphenyl)bicyclo[2.2.1]hept-2-ene,
5-(4-biphenyl)-5-methylbicyclo[2.2.1]hept-2-ene,

5-aminomethylbicyclo[2.2.1]hept-2-ene,
5-trimethoxysilylbicyclo[2.2.1]hept-2-ene,
5-triethoxysilylbicyclo[2.2.1]hept-2-ene,
5-tri-n-propoxysilylbicyclo[2.2.1]hept-2-ene,
5-tri-n-butoxysilylbicyclo[2.2.1]hept-2-ene,
5-chloromethylbicyclo[2.2.1]hept-2-ene,
5-hydroxymethylbicyclo[2.2.1]hept-2-ene,
5-cyclohexenylbicyclo[2.2.1]hept-2-ene,
5-fluorobicyclo[2.2.1]hept-2-ene,
5-fluoromethylbicyclo[2.2.1]hept-2-ene,
5-trifluoromethylbicyclo[2.2.1]hept-2-ene,
5,5-difluorobicyclo[2.2.1]hept-2-ene,
5,6-difluorobicyclo[2.2.1]hept-2-ene,
5,5-bis(trifluoromethyl)bicyclo[2.2.1]hept-2-ene,
5,6-bis(trifluoromethyl)bicyclo[2.2.1]hept-2-ene,
5-methyl-5-trifluoromethylbicyclo[2.2.1]hept-2-ene,
5,5,6-trifluorobicyclo[2.2.1]hept-2-ene,
5,5,6,5-tetrafluorobicyclo[2.2.1]hept-2-ene,
8-fluorotetracyclo[4.4.0.$1^{2,5}$.$1^{7,10}$] -3-dodecene,
8-fluoromethyltetracyclo [4.4.0.$1^{2,5}$.$1^{7,10}$] -3-dodecene,
8-trifluoromethyltetracyclo [4.4.0.$1^{2,5}$.$1^{7,10}$] -3-dodecene, and
8,8-difluorotetracyclo [4.4.0.$1^{2,5}$.$1^{7,10}$] -3-dodecene.

The above compounds can be used singly or in combination of two or more kinds, as norbornene-based monomers (I).
Of the above specific monomers, the specific monomer wherein at least one of $R^7$ to $R^{10}$ in the formula (I) is a specific polar group represented by the following formula (III) is preferable from the viewpoint that the resulting thermoplastic resin composition and optical film obtained therefrom keep good balance between the heat resistance and the moisture (water) resistance.

$$-(CH_2)_nCOOR^{11} \qquad (III)$$

In the above formula, n is usually 0 or an integer of 1 to 5, and $R^{11}$ is a hydrocarbon group of 1 to 15 carbon atoms.
The value of n and the number of carbon atoms of $R^{11}$ in the formula (V) are preferably as small as possible, because as the value of n becomes smaller or the number of carbon atoms of $R^{11}$ becomes smaller, the resulting thermoplastic resin composition has a higher glass transition temperature and is more improved in the heat resistance. That is to say, although n is usually 0 or an integer of 1 to 5, it is preferably 0 or 1, and although $R^{11}$ is usually a hydrocarbon group of 1 to 15 carbon atoms, it is preferably an alkyl group of 1 to 3 carbon atoms.
Further, the specific monomer of the formula (I) wherein an alkyl group is further bonded to a carbon atom to which the polar group represented by the formula (III) is bonded is preferable from the viewpoint that the resulting thermoplastic resin composition and optical film obtained therefrom keep good balance between the heat resistance and the moisture (water) resistance. The number of carbon atoms of this alkyl group is preferably 1 to 5, more preferably 1 to 2, particularly preferably 1.
Of such specific monomers, 8-methyl-8-methoxycarbonyltetracyclo[4.4.0.$1^{2,5}$.$1^{7,10}$]-3-dodecene, 8-methyl-8-ethoxycarbonyltetracyclo[4.4.0.$1^{2,5}$.$1^{7,10}$]-3-dodecene, 8-methyl-8-butoxycarbonyltetracyclo[4.4.0.$1^{2,5}$.$1^{7,10}$]-3-dodecene, and a combination of 8-methyl-8-methoxycarbonyltetracyclo[4.4.0.$1^{2,5}$.$1^{7,10}$]-3-dodecene and 5-methyl-5-methoxycarbonyl-bicyclo[2.2.1]hept-2-ene are preferable from the viewpoint that the resulting thermoplastic resin composition and optical film obtained therefrom have excellent heat resistance, and a combination of 8-methyl-8-methoxycarbonyltetracyclo [4.4.0.$1^{2,5}$.$1^{7,10}$]-3-dodecene and 5-methyl-5-methoxycarbonyl-bicyclo[2.2.1]hept-2-ene is particularly preferable from the viewpoint that a cycloolefin-based polymer which has excellent compatibility with the vinyl-based polymer (B) and whose glass transition temperature can be controlled is obtained.
The cycloolefin-based polymer obtained by ring-opening polymerization of such a specific monomer is, for example, a polymer having a structural unit represented by the following formula (II):
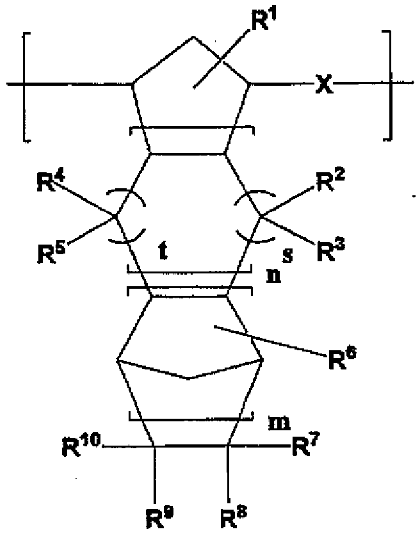

(II)

wherein $R^1$, $R^2$, $R^3$, $R^4$, $R^5$, $R^6$, $R^7$, $R^8$, $R^9$, $R^{10}$, m, n, s and t have the same meanings as in the formula (I), X is a group represented by the formula -CH=CH- or a group represented by the formula $-CH_2CH_2-$, and plural X may be the same or different.
In the present invention, the cycloolefin-based polymer is preferably a polymer containing a structural unit of the formula (II) in which n is 0, m is 0 or 1, and at least one of $R^7$ to $R^{10}$ is a group represented by the formula $-(CH_2)_pCOOR^{12}$ (wherein $R^{12}$ is a hydrocarbon group of 1 to 20 carbon atoms, and p is an integer of 0 to 10).

Copolymerizable monomer

Although the specific monomer may be ring-opening polymerized alone, the specific monomer and another copolymerizable monomer may be ring-opening copolymerized.
Examples of the copolymerizable monomers include cycloolefins, such as cyclobutene, cyclopentene, cycloheptene and cyclooctene. The number of carbon atoms of the cycloolefin is in the range of preferably 4 to 20, more preferably 5 to 12. The specific monomer may be ring-opening polymerized in the presence of an unsaturated hydrocarbon-based polymer containing a carbon-carbon double bond in the main chain, such as polybutadiene, polyisoprene, a styrene/butadiene copolymer, an ethylene/non-conjugated diene copolymer or norbornene. In this case, the resulting ring-opened copolymer and its hydrogenated copolymer are each useful in the invention because the obtainable thermoplastic resin composition shows high impact resistance.

Ring-opened polymer

The ring-opened polymer (formula (II)) can be obtained by ring-opening polymerization of the specific monomer, and if necessary, the copolymerizable monomer, through a hitherto known process in the presence of a ring-opening polymerization catalyst and using, if necessary, a molecular weight modifier and a ring-opening polymerization solvent.
In the case where the specific monomer and the copolymerizable monomer are copolymerized, it is desirable to copolymerize the specific monomer in an amount of usually not less than 50% by weight and less than 100% by weight, preferably not less than 60% by weight and less than 100% by weight, more preferably not less than 70% by weight and less than 100% by weight, and the copolymerizable monomer in an amount of usually more than 0% by weight and not more than 50% by weight, preferably more than 0% by weight and not more than 40% by weight, more preferably more than 0% by weight and not more than 30% by weight, each amount being based on the total 100% by weight of the specific monomer and the copolymerizable monomer.
As the ring-opened polymer for use in the invention, a homopolymer of the specific monomer or a copolymer of two or more kinds of the specific monomers is most preferable.

Ring-opening polymerization catalyst

As the catalyst for ring-opening polymerization used in the invention, a catalyst described in "Olefin Metathesis and Metathesis Polymerization" (K.J. IVIN, J.C. MOL, Academic Press, 1997) is preferably used.
Such a catalyst is, for example, a metathesis polymerization catalyst comprising a combination of (a) at least

one compound selected from compounds of W, Mo, Re, V and Ti and (b) at least one compound selected from compounds containing Li, Na, K, Mg, Ca, Zn, Cd, Hg, B, Al, Si, Sn, Pb, etc. and having at least one bond of the element and carbon or hydrogen. In order to enhance catalytic activity, the later-described additive (c) may be added to the above catalyst. As another catalyst, there can be mentioned (d) a metathesis catalyst which comprises a periodic table Group 4 to Group 8 transition metal-carbene complex or metallocyclobutane complex, without cocatalyst.

Typical examples of the compounds of W, Mo, Re, V and Ti suitably used as the components (a) include compounds described in Japanese Patent Laid-Open Publication No. 240517/1989, such as $WCl_6$, $MoCl_5$, $ReOCl_3$, $VOCl_3$ and $TiCl_4$.

Examples of the components (b) include compounds described in Japanese Patent Laid-Open Publication No. 240517/1989, such as n-$C_4H_9Li$, $(C_2H_5)_3Al$, $(C_2H_5)_2AlCl$, $(C_2H_5)_{1.5}AlCl_{1.5}$, $(C_2H_5)AlCl_2$, methylalumoxane and LiH.

Typical examples of the components (c) (i.e., additives) preferably used include alcohols, aldehydes, ketones and amines. Further, compounds described in Japanese Patent Laid-Open Publication No. 240517/1989 are also employable.

Typical examples of the catalysts (d) include W(=N-2,6-$C_6H_3$iPr$_2$) (=CHtBu) (OtBu)$_2$, Mo (=N-2, 6-$C_6H_3$iPr$_2$) (=CHtBu) (OtBu)$_2$, Ru (=CHCH=CPh$_2$)(PPh$_3$)$_2$Cl$_2$ and Ru (=CHPh) (P$C_6H_{11}$)$_2$Cl$_2$.

The metathesis catalyst is desirably used in such an amount that the molar ratio between the component (a) and all the monomers (norbornene-based monomers (Im), (IIm) and other copolymerizable monomers, the same shall apply hereinafter) (compound (a):all the monomers) becomes usually 1:500 to 1:500,000, preferably 1:1,000 to 1:100,000. The molar ratio between the component (a) and the component (b) ((a):(b)) is desired to be in the range of usually 1:1 to 1:100, preferably 1:2 to 1:50, in terms of a metal atom ratio. When the additive (c) is added to the metathesis catalyst, the molar ratio between the component (c) and the component (a) ((c):(a)) is desired to be in the range of usually 0.005: 1 to 15:1, preferably 0.05:1 to 7:1. The catalyst (d) is desirably used in such an amount that the molar ratio between the component (d) and all the monomers (component (d):all the monomers) becomes usually 1:50 to 1:100,000, preferably 1:100 to 1:500,000.

Molecular weight modifier

The molecular weight of the ring-opened (co)polymer can be controlled by polymerization temperature, type of the catalyst and type of a solvent. In the present invention, however, control of the molecular weight is preferably carried out by allowing a molecular weight modifier to coexist in the reaction system. Examples of preferred molecular weight modifiers include $\alpha$-olefins, such as ethylene, propylene, 1-butene, 1-pentene, 1-hexene, 1-heptene, 1-octene, 1-nonene and 1-decene; styrenes, such as styrene and vinyltoluene; and allyl compounds, such as allylacetic acid and allylbenzene. Of these, 1-butene, 1-hexene and 1-octene are particularly preferable. These molecular weight modifiers can be used singly or as a mixture of two or more kinds. The molecular weight modifier is used in an amount of usually 0.001 to 0.6 mol, preferably 0.02 to 0.5 mol, based on 1 mol of all the monomers used in the ring-opening (co)polymerization.

Solvent for ring-opening (co)polymerization reaction

Examples of the solvents for use in the ring-opening (co)polymerization, namely, solvents to dissolve the norbornene-based monomer, the metathesis catalyst and the molecular weight modifier, include hydrocarbons, such as petroleum ether, pentane, hexane, heptane, octane, nonane and decane; cyclic hydrocarbons, such as cyclopentane, cyclohexane, methylcyclohexane, cycloheptane, cyclooctane, decalin and norbornane; aromatic hydrocarbons, such as benzene, toluene, xylene, ethylbenzene, cumene and chlorobenzene; halogenated hydrocarbons, such as dichloromethane, dichloroethane, chlorobutane, chloroform and tetrachloroethylene; esters, such as methyl acetate, ethyl acetate, n-butyl acetate, isobutyl acetate and methyl propionate; ethers, such as dibutyl ether, tetrahydrofuran, dimethoxyethane and dioxane; N,N-11-dimethylformamide; N,N-dimethylacetamide; and N-methylpyrrolidone. These solvents can be used singly or by mixing them. Of these, aromatic hydrocarbons are preferable. The solvent is used in such an amount that the ratio between the solvent and all the monomers (solvent:all monomers, by weight) is usually 0.5:1 to 20:1, preferably 0.5:1 to 10:1.

Hydrogenation

In the present invention, the cycloolefin-based ring-opened polymer (A) may be prepared by the ring-opening polymerization only, but it is preferable to further hydrogenate the ring-opened polymer obtained by the ring-opening polymerization. In the case of the cycloolefin-based ring-opened polymer obtained by the ring-opening polymerization only, each X in the structural unit represented by the aforesaid formula (II) is an olefinic unsaturated group represented by the formula -CH=CH-. The ring-opened polymer can be used as it is, but from the viewpoint of heat stability, it is

preferable to use a hydrogenation product obtained by hydrogenating the olefinic unsaturated group to convert the above X into a group represented by the formula $-CH_2-CH_2-$. However, the hydrogenation product referred to in the invention is a product wherein the olefinic unsaturated group has been hydrogenated but the aromatic ring of the side chain based on the cycloolefin-based monomer has not been substantially hydrogenated.

The degree of hydrogenation is desired to be not less than 90%, preferably not less than 95%, more preferably not less than 97%, of X in the aforesaid structural units (II). As the degree of hydrogenation is increased, occurrence of coloring or deterioration due to heat can be inhibited more, so that the degree of hydrogenation is preferably high.

In the preparation process, the hydrogenation reaction needs to be carried out under such conditions that the aromatic ring of the side chain based on the monomer (I) is not substantially hydrogenated. On this account, it is desirable to usually carry out the hydrogenation reaction by adding a hydrogenation catalyst to a solution of the ring-opened polymer and allowing hydrogen to act thereon at atmospheric pressure to 30 MPa, preferably 2 to 20 MPa, more preferably 3 to 18 MPa.

As the hydrogenation catalyst, a catalyst that is used for usual hydrogenation reaction of an olefinic compound is employable. As such a hydrogenation catalyst, any of publicly known heterogeneous catalysts and homogeneous catalysts is employable. Examples of the heterogeneous catalysts include solid catalysts wherein precious metal catalytic substances, such as palladium, platinum, nickel, rhodium and ruthenium, are supported on carriers, such as carbon, silica, alumina and titania. Examples of the homogeneous catalysts include nickel naphthenate/triethylaluminum, bis (acetylacetonato)nickel(II)/triethylaluminum, cobalt octenate/n-butyllithium, titanocene dichloride/diethylaluminum monochloride, rhodium acetate, chlorotris (triphenylphosphine) rhodium, dichlorotris (triphenylphosphine) ruthenium, chlorohydrocarbonyltris(triphenylphosphine)ruthenium and dichlorocarbonyltris(triphenylphosphine)ruthenium. The catalysts may be in the form of a powder or particles. These hydrogenation catalysts can be used singly or in combination of two or more kinds.

In order that the aromatic ring of the side chain based on the specific monomer (I) or other monomers should not be substantially hydrogenated, the amount of the hydrogenation catalyst added needs to be controlled, and the hydrogenation catalyst is desirably used in such an amount that the ratio between the ring-opened (co)polymer and the hydrogenation catalyst (ring-opened (co)polymer:hydrogenation catalyst, by weight) is usually $1:1\times10^{-6}$ to 1:2.

Addition type polymer (saturated copolymer)

In the present invention, in addition to the ring-opened polymer and its hydrogenated polymer, a saturated copolymer of the specific monomer and an unsaturated double bond-containing compound can be also used as the cycloolefin-based polymer (A). It is desirable to copolymerize the specific monomer in an amount of usually 50 to 90% by weight, preferably 60 to 90% by weight, more preferably 70 to 90% by weight, and the unsaturated double bond-containing compound in an amount of usually 10 to 50% by weight, preferably 10 to 40% by weight, more preferably 10 to 30% by weight, each amount being based on the total 100% by weight of the specific monomer and the unsaturated double bond-containing compound.

Examples of the unsaturated double bond-containing compounds include compounds of olefins of 2 to 12 carbon atoms, preferably 2 to 8 carbon atoms, such as ethylene, propylene and butene.

As a catalyst for use in the copolymerization reaction of the specific monomer with the unsaturated double bond-containing compound, a catalyst comprising a vanadium compound and an organoaluminum compound can be mentioned. The vanadium compound is, for example, a vanadium compound represented by the formula $VO(OR)_aX_b$ or $V(OR)_cX_d$ (wherein R is a hydrocarbon group, $0\leq a\leq 3$, $0\leq b\leq 3$, $2\leq a+b\leq 3$, $0\leq c\leq 4$, $0\leq d\leq 4$ and $3\leq c+d\leq 4$) or an electron donor adduct thereof. Examples of the electron donors include oxygen-containing electron donors, such as alcohol, phenols, ketone, aldehyde, carboxylic acid, ester of organic acid or inorganic acid, ether, acid amide, acid anhydride and alkoxysilane; and nitrogen-containing electron donors, such as ammonia, amine, nitrile and isocyanate. The organoaluminum compound is, for example, at least one organoaluminum compound selected from compounds having at least one aluminum-carbon bond or aluminum-hydrogen bond. The proportion of the organoaluminum compound to the vanadium compound in the catalyst is as follows. That is to say, the ratio of the aluminum atom to the vanadium atom (Al/V) is usually not less than 2, preferably 2 to 50, particularly preferably 3 to 20.

Examples of solvents employable in the above copolymerization reaction include hydrocarbons, such as pentane, hexane, heptane, octane, nonane and decane; cyclic hydrocarbons, such as cyclohexane and methylcyclohexane; aromatic hydrocarbons, such as benzene, toluene and xylene; and halogen derivatives of the aromatic hydrocarbons. Of these, cyclohexane and methylcyclohexane are preferable.

Cycloolefin-based polymer

The cycloolefin-based polymer (A) for use in the invention desirably has an intrinsic viscosity $[\eta_{inh}]$, as measured in a chlorobenzene solution (concentration: 0.5 g/100 ml) at 30°C, of 0.2 to 5.0 dl/g. Further, the cycloolefin-based

polymer (A) desirably has a number-average molecular weight (Mn) in terms of polystyrene, as measured by gel permeation chromatography (GPC), of usually 8,000 to 1,000,000, preferably 10,000 to 800,000, more preferably 20,000 to 500,000, and a weight-average molecular weight (Mw) of usually 10,000 to 3,000,000, preferably 20,000 to 2,000,000, more preferably 30,000 to 1,000,000.

If the molecular weight is too low, the strength of the resulting shaped article or the resulting film is sometimes lowered. If the molecular weight is too high, the solution viscosity becomes too high, and hence, productivity or processability of the thermoplastic resin composition of the invention is sometimes deteriorated.
The cycloolefin-based polymer (A) desirably has a molecular weight distribution (Mw/Mn) of usually 1.5 to 10, preferably 2 to 8, more preferably 2 to 5.

The cycloolefin-based polymer (A) has a glass transition temperature (also referred to as "Tg" hereinafter) of usually 100 to 170°C, preferably 110 to 160°C, more preferably 115 to 160°C. If Tg is too low, the heat distortion temperature is lowered, so that a problem of heat resistance is liable to occur, and besides, there sometimes occurs a problem that optical properties of the resulting shaped article or the resulting film greatly change with temperature becomes large. On the other hand, if Tg is too high, it is difficult to control the difference in Tg between this polymer and the vinyl-based polymer (B) to less than 50°C.

<u>(B) Vinyl-based polymer having polar group</u>

The vinyl-based polymer (B) for use in the invention is characterized by having a polar group. Preferred examples of the polar groups include a hydroxyl group, an acid anhydride group (including acid chloride), an amide group and a carboxyl group. In order to enhance compatibility with the cycloolefin-based polymer (A), a hydroxyl group, an acid anhydride group and an amide group are particularly preferably used.

The vinyl-based polymer (B) is preferably a polymer having a structural unit derived from an aromatic vinyl-based monomer.

<u>Vinyl-based monomer</u>

Examples of monomers that give a hydroxyl group as the polar group to the vinyl-based polymer (B) include hydroxystyrenes, such as p-hydroxystyrene, α-methyl-p-hydroxystyrene, 2-methyl-4-hydroxystyrene and 3,4-dihydroxystyrene; and hydroxyalkyl (meth)acrylate monomers, such as 2-hydroxyethyl (meth)acrylate and 3-hydroxypropyl (meth) acrylate. Of these, α-methyl-p-hydroxystyrene is preferable as the hydroxystyrene monomer, and 2-hydroxyethyl (meth) acrylate is preferable as the hydroxyalkyl (meth)acrylate monomer.

Examples of monomers that give an acid anhydride group as the polar group to the vinyl-based polymer (B) include acid anhydride group-containing monomers, such as maleic anhydride, citraconic anhydride, cis-1-cyclohexene-1,2-dicarboxylic anhydride, 3-methyl-cis-1-cyclohexene-1,2-dicarboxylic anhydride and 4-methyl-cis-1-cyc3ohexene-1,2-dicarboxylic anhydride; and acid chloride-containing monomers, such as acryloyl chloride and methacryloyl chloride. Of these, preferable are acid anhydride-containing monomers, and particularly preferable is maleic anhydride.

Examples of monomers that give an amide group as the polar group to the vinyl-based polymer (B) include N-phenyl(meth)acrylamide and N-(4-hydroxyphenyl) (meth) acrylamide.
Examples of monomers that give a carboxyl group as the polar group to the vinyl-based polymer (B) include acrylic acid, methacrylic acid and itaconic acid.

These monomers that give a polar group can be used singly or in combination of two or more kinds, as the copolymerization components.
Examples of the aromatic vinyl-based monomers other than the above monomers include styrene; alkyl substituted styrenes, such as α-methylstyrene, β-methylstyrene and p-methylstyrene; halogen substituted styrenes, such as 4-chlorostyrene and 4-bromostyrene; vinylbenzyl alcohols; alkoxy substituted styrenes, such as p-methoxystyrene, p-t-butoxystyrene and m-t-butoxystyrene; vinylbenzoic acids, such as 3-vinylbenzoic acid and 4-vinylbenzoic acid; vinylbenzoic esters, such as methyl 4-vinylbenzoate and ethyl 4-vinylbenzoate; 4-vinylbenzyl acetate; 4-acetoxystyrene; amidostyrenes, such as 2-butylamidostyrene, 4-methylamidostyrene and p-sulfonamidostyrene; aminostyrenes, such as 3-aminostyrene, 4-aminostyrene, 2-isopropenylaniline and vinylbenzyldimethylamine; nitrostyrenes, such as 3-nitrostyrene and 4-nitrostyrene; cyanostyrenes, such as 3-cyanostyrene and 4-cyanostyrene; vinylphenylacetonitrile; and arylstyrenes, such as phenylstyrene. These monomers may be used in combination of two or more kinds as the copolymerization components. Of these, styrene and α-methylstyrene are preferable because they are industrially easily available and are inexpensive.

Examples of monomers that give other structural units of the vinyl-based polymer (B) include vinyl cyanide monomers, such as acrylonitrile and methacrylonitrile; (meth)acrylates, such as methyl (meth)acrylate, ethyl (meth) acrylate, benzyl (meth)acrylate and phenyl (meth)acrylate; and maleimide monomers, such as N-phenylmaleimide. Of these, vinyl cyanide monomers are preferable from the viewpoint of polymerizability.

Examples of combinations of monomers particularly preferably used in the synthesis of the vinyl-based polymer (B) include styrene/α-methyl-p-hydroxystyrene, styrene/α-methyl-p-hydroxystyrene/acrylonitride, styrene/maleic anhydride, styrene/maleic anhydride/acrylonitrile, and styrene/N-phenylacrylamide/acrylic acid.

Radical polymerization initiator

When the vinyl-based polymer (B) for use in the invention is synthesized by radical polymerization, a publicly known organic peroxide that generates free radical or an azobis type radical polymerization initiator is employable.

Examples of the organic peroxides include:

diacyl peroxides, such as diacetyl peroxide, dibenzoyl peroxide, diisobutyroyl peroxide, di(2,4-dichlorobenzoyl) peroxide, di(3,5,5-trimethylhexanoyl) peroxide, dioctanoyl peroxide, dilauroyl peroxide, distearoyl peroxide and bis {4-(m-toluoyl)benzoyl} peroxide;

ketone peroxides, such as methyl ethyl ketone peroxide, cyclohexanone peroxide, methylcyclohexanone peroxide and acetylacetone peroxide;

hydroperoxides, such as hydrogen peroxide, t-butyl hydroperoxide, α-cumene hydroperoxide, p-menthane hydroperoxide, diisopropylbenzene hydroperoxide, 1,1,3,3-tetramethylbutyl hydroperoxide and t-hexyl hydroperoxide;

dialkyl peroxides, such as di-t-butyl peroxide, dicumyl peroxide, dilauryl peroxide, α,α'-bis(t-butylperoxy)diisopropylbenzene, 2,5-dimethyl-2,5-bis(t-butylperoxy)hexane, t-butylcumyl peroxide and 2,5-dimethyl-2,5-bis(t-butylperoxy)hexyne-3;

peroxy esters, such as t-butyl peroxyacetate, t-butyl peroxypivalate, t-hexyl peroxypivalate, 1,1,3,3-tetramethylbutyl peroxy-2-ethylhexanoate, 2,5-dimethyl-2,5-bis(2-ethylhexanoylperoxy)hexane, 1-cyclohexyl-1-methylethyl peroxy-2-ethylhexanoate, t-hexyl peroxy-2-ethylhexanoate, t-butyl peroxy-2-ethylhexanoate, t-butyl peroxyisobutyrate, t-butyl peroxymaleate, t-butyl peroxy-3,5,5-trimethylhexanoate, t-butyl peroxylaurate, 2,5-dimethyl-2,5-bis(m-toluoylperoxy)hexane, α,α'-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneododecanoate, t-butyl peroxybenzoate, t-hexyl peroxybenzoate, bis(t-butylperoxy)isophthalate, 2,5-dimethyl-2,5-bis(benzoylperoxy)hexane, t-butyl peroxy-m-toluoylbenzoate and 3,3',9,4'-tetra(t-butylperoxycarbonyl)benzophenone;

peroxy ketals, such as 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexane, 1,1-bis(t-butylperoxy)cyclododecane, 2,2-bis(t-butylperoxy)butane, n-butyl 4,9-bis(t-butylperoxy)pivalate and 2,2-bis(4,4-di-t-butylperoxycyclohexyl)propane;

peroxy monocarbonates, such as t-hexyl peroxyisopropyl monocarbonate, t-butyl peroxyisopropyl monocarbonate, t-butyl peroxy-2-ethylhexyl monocarbonate and t-butyl peroxyallyl monocarbonate;

peroxy dicarbonates, such as di-sec-butyl peroxydicarbonate, di-n-propyl peroxydicarbonate, diisopropyl peroxydicarbonate, bis(4-t-butylcyclohexyl) peroxydicarbonate, di-2-ethoxyethyl peroxydicarbonate, di-2-ethylhexyl peroxydicarbonate, di-2-methoxybutyl peroxydicarbonate and di(3-methyl-3-methoxybutyl) peroxydicarbonate; and

other compounds, such as t-butyltrimethylsilyl peroxide.

However, the organic peroxide employable in the invention is not limited to the above-exemplified compounds.

Examples of the azobis type radical polymerization initiators include azobisisobutyronitrile, azobisisovaleronitrile, 2,2'-azobis(4-methoxy-2,4-dimethylvaleronitrile), 2,2'-azabis(2,4-dimethylvaleronitrile), 2,2'-azobis(2-methylbutyronitrile), 1,1'-azobis(cyclohexane-1-carbonitrile), 2-(carbamoylazo)isobutyranitrile, 2,2'-azobis [2-methyl-N-{1,1-bis (hydroxymethyl)-2-hydroxyethyl}propionamide], 2,2'-azobis[2-methyl-N-{2-(1-hydroxybutyl)}propionamide], 2,2'-azobis[2-methyl-N-(2-hydroxyethyl)-propionamide], 2,2'-azobis[N-(2-propenyl)-2-methylpropionamide], 2,2'-azobis(N-butyl-2-methylpropionamide), 2,2'-azobis(N-cyclohexyl-2-methylpropionamide), 2,2'-azobis[2-(5-methyl-2-imidazolin-2-yl)propane]dihydrochloride, 2,2'-azobis[2-(2-imidazolin-2-yl)propane]dihydrochloride, 2,2'-azobis[2-(2-imidazolin-2-yl)propane]disulfate-dihydrate, 2,2'-azobis[2-(3,4,5,6-tetrahydropyrimidin-2-yl)propane]dihydrochloride, 2,2'-azobis[2-{1-(2-hydroxyethyl)-2-imidazolin-2-yl}propane]dihydrochloride, 2,2'-azobis[2-(2-imidazolin-2-yl)propane], 2,2'-azobis(2-methylpropionamidine)dihydrochloride, 2,2'-azobis[N-(2-carboxyethyl)-2-methyl-propionamidine], 2,2'-azobis(2-methylpropionamidoxime), dimethyl 2,2'-azobisbutyrate, 4,4'-azobis(4-cyanopentanoic acid) and 2,2'-azobis(2,4,4-trimethylpentane). However, the azobis type radical polymerization initiator employable in the invention is not limited to the above-exemplified compounds.

Catalyst

In the copolymerization reaction of the vinyl-based monomer, a catalyst may be used. This catalyst is not specifically restricted. For example, publicly known anionic polymerization catalysts, coordination anionic polymerization catalysts and cationic polymerization catalysts are employable.

Vinyl-based polymer

The vinyl-based polymer (B) for use in the invention is obtained by copolymerizing the vinyl-based monomer in the presence of the polymerization initiator and the catalyst through a heretofore known process, such as bulk polymerization, solution polymerization, precipitation polymerization, emulsion polymerization, suspension polymerization or bulk-suspension polymerization.

In the vinyl-based polymer (B) obtained as above, the proportion of the structural units having a polar group, i.e., structural units derived from the monomer that give a polar group, is in the range of usually 1 to 40% by weight, preferably 1 to 30% by weight, more preferably 2 to 20% by weight, based on the total 100% by weight of all the structural units. When the proportion of the structural units having a polar group is in the above range, the vinyl-based polymer (B) is preferable from the viewpoints of compatibility and low water absorption. The proportion of the structural units derived from the aromatic vinyl-based monomer is in the range of usually 60 to 99% by weight, preferably 70 to 99% by weight, more preferably 80 to 98% by weight. When the proportion of the structural units derived from the aromatic vinyl-based monomer is in the above range, the vinyl-based polymer (B) is preferable from the viewpoint of compatibility with the cycloolefin-based resin (A).

The vinyl-based polymer (B) desirably has a number-average molecular weight (Mn) in terms of polystyrene, as measured by gel permeation chromatography (GPC), of usually 3,000 to 500,000, preferably 5,000 to 400,000, more preferably 10,000 to 250,000, and a weight-average molecular weight (Mw) of usually 500 to 1,000,000, preferably 5,000 to 800,000, more preferably 20,000 to 500,000. If the molecular weight is too low, the strength of the resulting film is sometimes lowered. If the molecular weight is too high, the solution viscosity becomes too high, and hence, productivity or processability of the thermoplastic resin composition of the invention is sometimes deteriorated.

The vinyl-based polymer (B) has a molecular weight distribution (Mw/Mn) of usually 1.0 to 10, preferably 1.2 to 5, more preferably 1.2 to 4.

The vinyl-based polymer (B) has Tg of usually 75 to 140°C, preferably 80 to 130°C, more preferably 90 to 130°C. If Tg is too low, Tg of the thermoplastic resin composition is lowered, so that a problem of heat resistance is liable to occur, and besides, there sometimes occurs a problem that optical properties of the resulting shaped article or film with temperature change greatly. On the other hand, if Tg is too high, the strength tends to be extremely lowered.

Thermoplastic resin composition

The thermoplastic resin composition of the invention comprises the cycloolefin-based polymer (A) and the vinyl-based polymer (B) having a polar group and has a glass transition temperature (Tg) of not lower than 100°C, preferably not lower than 110°C.

If Tg is lower than 100°C, the resulting optical film is deteriorated in the heat resistance and has problems of deformation and deterioration of optical properties in the practical use. In the present invention, Tg of the thermoplastic resin composition and Tg of each polymer were determined in the following manner. Using a differential scanning calorimeter (DSC), measurement was carried out under the conditions of a nitrogen atmosphere and a heating rate of 20°C/min, and Tg was determined as an intersecting point between the tangent to the DSC curve at the peak temperature of the resulting time derivative DSC curve and the tangent to the DSC curve at the temperature of said peak temperature - 20°C (see Fig. 1).

In the thermoplastic resin composition of the invention, the difference in glass transition temperature between the polymers (A) and (B) is less than 50°C, preferably less than 45°C. If the difference in Tg between the polymers is not less than 50°C, the stress becomes too high to make stretching difficult when the resulting optical film is stretched, or relaxation of stretch orientation occurs when the stretching temperature is raised, and hence, there is a fear of lowering of optical properties such as development of retardation and dispersion of wavelength.

The compositional ratio of the thermoplastic resin composition is not specifically restricted, but in the case where the thermoplastic resin composition is used for producing the optical film, the resin composition desirably contains the vinyl-based polymer (B) having a polar group in an amount of 20 to 200 parts by weight, preferably 25 to 100 parts by weight, more preferably 30 to 80 parts by weight, based on 100 parts by weight of the cycloolefin-based polymer (A). The thermoplastic resin composition containing the vinyl-based polymer (B) in the above amount is preferable from the viewpoint of resin strength, and by the use of such a thermoplastic resin composition, the obtainable retardation film exhibits excellent development of retardation. If the amount of the vinyl-based polymer (B) is less than the lower limit of

the above range, optical properties of the oriented film using the resulting resin are sometimes markedly lowered. If the amount thereof exceeds the upper limit of the above range, not only the strength is lowered but also the retardation film using the resulting resin sometimes has negative development of retardation.

In the case where the thermoplastic resin composition is applied to an injection molded article, the amount of the vinyl-based polymer (B) is desired to be in the range of preferably 10 to 300 parts by weight, more preferably 30 to 150 parts by weight, particularly preferably 40 to 100 parts by weight, based on 100 parts by weight of the cycloolefin-based polymer (A).

The thermoplastic resin composition of the invention may further contain a hydrocarbon resin in addition to the polymers (A) and (B). Examples of the hydrocarbon resins include $C_5$-based resins, $C_9$-based resins, $C_5$-based/$C_9$-based mixture resins, cyclopentadiene-based resins, olefin/vinyl substituted aromatic compound copolymer-based resins, cyclopentadiene compound/vinyl substituted aromatic compound copolymer-based resins, hydrogenation products of these resins, and hydrogenation products of vinyl substituted aromatic resins. The content of the hydrocarbon resin is in the range of usually 0.01 to 50 parts by weight, preferably 0.1 to 25 parts by weight, based on 100 parts by weight of the cycloolefin-based polymer (A).

To the thermoplastic resin composition of the invention, various additives may be added. For example, in order to improve heat deterioration resistance and light resistance, antioxidants, ultraviolet light absorbers, etc. described below may be added.

Examples of the antioxidants include 2,6-di-t-butyl-4-methylphenol, 2,2'-dioxy-3,3'-di-t-butyl-5,5'-dimethyldiphenylmethane, tetrakis[methylene-3-(3,5-di-t-butyl-4-hydroxyphenyl)propionato]methane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, stearyl-β-(3,5-di-t-butyl-4-hydroxyphenyl) propionate, 2 ,2' -dioxy-3,3' -di-t-butyl-5,5'-diethylphenylmethane, 3,9-bis [1,1-dimethyl-2- (β-(3-t-butyl-4-hydroxy-5-methylphenyl)propionyloxy)ethyl], 2,4,8,10-tetraoxaspiro[5.5]undecane, tris(2,4-di-t-butylphenyl) phosphite, cyclic neopentanetetraylbis(2,4-di-t-butylphenyl) phosphite, cyclic neopentanetetraylbis(2,6-di-t-butyl-4-methylphenyl) phosphite and 2,2-methylenebis(4,6-di-t-butylphenyl)octyl phosphite.

Examples of the ultraviolet light absorbers include 2,4-dihydroxybenzophenone, 2-hydroxy-4-methoxybenzophenone, 2-(2H-benzotriazol-2-yl)-4,6-bis(1-methyl-1-phenylethyl)phenol, 2-(2H-benzotriazol-2-yl)-4,6-di-tert-pentylphenol, 2-benzotriazol-2-yl-4,6-di-tert-butylphenol and 2,2'-methylenebis[4-(1,1,3,3,-tetramethylbutyl)-6-[(2H-benzotriazol-2-yl)phenol]].

The amount of these additives is in the range of usually 0.01 to 5 parts by weight, preferably 0.05 to 4 parts by weight, based on 100 parts by weight of the resin composition.

For the purpose of improving processability, additives such as lubricant can be further added to the thermoplastic resin composition of the invention.

The thermoplastic resin composition of the invention can be prepared by, for example, the following processes:

(i) a process comprising mixing the cycloolefin-based polymer (A), the vinyl-based polymer (B) and arbitrary components by the use of a twin-screw extruder, a roll kneading machine or the like, and
(ii) a process comprising adding the vinyl-based polymer (B) and arbitrary components to a solution of the cycloolefin-based polymer (A) in an appropriate solvent and mixing them.

Optical film

The optical film of the invention can be produced by forming the above-described thermoplastic resin composition of the invention through a publicly known forming method. For example, it can be produced by forming the resin composition into a film using a solvent casting method, an injection molding method, a compression molding method or an extrusion method.

The solvent casting method is, for example, a method comprising dissolving or dispersing the thermoplastic resin composition of the invention in a solvent to prepare a liquid of a proper concentration, then pouring or applying the liquid onto an appropriate carrier, drying the liquid layer and then peeling the resulting film from the carrier.

When the thermoplastic resin composition of the invention is dissolved or dispersed in a solvent, the concentration of the thermoplastic resin composition is adjusted to usually 1 to 90% by weight, preferably 5 to 50% by weight, more preferably 10 to 35% by weight. If the concentration of the resin is less than the lower limit of the above range, it becomes difficult to ensure a film thickness. Further, because of foaming that accompanies evaporation of the solvent, it becomes difficult to obtain a film of surface smoothness. On the other hand, if the concentration exceeds the upper limit of the above range, the solution viscosity becomes too high, and it becomes difficult to obtain an optical film of uniform thickness and uniform surface, so that such a concentration is undesirable.

The viscosity of the solution at room temperature is in the range of usually 1 to 1,000,000 (mPa·s), preferably 10 to 500,000 (mPa·s), more preferably 100 to 200,000 (mPa·s), particularly preferably 1,000 to 100,000 (mPa·s).

Examples of the solvents employable herein include hydrocarbon solvents, such as cyclohexane, cyclopentane and

methylcyclohexane; aromatic solvents, such as benzene, toluene and xylene; cellosolve solvents, such as methyl cellosolve, ethyl cellosolve and 1-methoxy-2-propanol; ketone solvents, such as diacetone alcohol, acetone, cyclohexanone, methyl ethyl ketone, 4-methyl-2-pentanone and methyl isobutyl ketone; ester solvents, such as methyl lactate, methyl acetate, ethyl acetate and butyl acetate; halogen-containing solvents, such as methylene chloride and chloroform; ether solvents, such as tetrahydrofuran, dioxane, dimethoxyethane and 1,3-dioxolane; and alcohol solvents, such as 1-butanol and 1-pentanol.

Otherwise, by the use of a solvent having a SP value (solubility parameter) of usually 10 to 30 ($MPa^{1/2}$), preferably 10 to 25 ($MPa^{1/2}$), more preferably 15 to 25 ($MPa^{1/2}$), particularly preferably 17 to 20 ($MPa^{1/2}$), The obtainable optical film has excellent surface uniformity and optical properties. As the SP values of the solvents, data described in "POLYMER HANDBOOK THIRD EDITION, VII/526" are used.

The above solvents can be used singly or in combination of two or more kinds. When two or more kinds of the solvents are used in combination, the SP value of the mixed solvent is desired to be in the above range. In this case, the value of the SP value of the mixed solvent can be determined from the weight ratio of the solvents. For example, if a mixture of two kinds of solvents is used and if the weight fractions of the solvents are represented by $W_1$ and $W_2$ and the SP values of the solvents are represented by $SP_1$ and $SP_2$, the SP value of the mixed solvent can be calculated from the following formula:

$$\text{SP value} = W_1 \cdot SP_1 + W_2 \cdot SP_2$$

The boiling point of the solvent at atmospheric pressure is usually not higher than 100°C, preferably not higher than 70°C, particularly preferably not higher than 45°C. If a solvent having a boiling point exceeding 100°C is used, the drying time after film formation becomes long, and the productivity is deteriorated. Further, the amount of the solvent remaining in the film is increased to thereby sometimes deteriorate optical properties such as development of retardation. Of the above solvents, methylene chloride is particularly preferably used because it has a low boiling point. If a conventional thermoplastic resin composition containing a cycloolefin-based polymer and a vinyl-based polymer is dissolved in methylene chloride without using a compatibilizing agent, then subjected to film formation and then subjected to evaporation of methylene chloride, there occurs a problem that an opaque film is formed. In the case of the thermoplastic resin composition of the invention, however, the obtainable film is transparent even if a compatibilizing agent is not used. As the result, drying at a lower temperature than before becomes possible in the solvent casting method, and heat deterioration in the forming process can be prevented.

In the preparation of the resin solution, the temperature for dissolving the thermoplastic resin composition of the invention in a solvent may be room temperature or higher than room temperature. Sufficient stirring makes the obtainable solution homogeneous. If the film is colored when needed, a colorant such as a dye or a pigment can be properly added to the solution.

In order to improve surface smoothness of the optical film, a leveling agent may be added to the solution. As the leveling agent, various common leveling agents can be used. For example, fluorine-based nonionic surface-active agents, special acrylic resin-based leveling agents and silicone-based leveling agents are employable.

For producing the optical film of the invention by a solvent casting method, a process comprising applying the above solution onto a carrier, such as a metal drum, a steel belt, a polyester film made of polyethylene terephthalate (PET) or polyethylene naphthalate (PEN), a polytetrafluoroethylene belt or the like, by the use of a die or a coater, then drying/removing the solvent and peeling the resulting film from the carrier is generally employable. Further, the optical film can be also produced by applying the resin composition solution onto the carrier by means of spraying, brushing, roll spin coating, dipping or the like, then drying/removing the solvent and peeling the resulting film from the carrier. By applying the solution repeatedly, film thickness or surface smoothness of the resulting film may be controlled.

In the case where a polyester film is used as a carrier, the polyester film may be a surface-treated film. As a method for the surface treatment, there can be mentioned a hydrophilic treatment method generally carried out, such as a method in which a layer of an acrylic resin or a sulfonate group-containing resin is superposed on the film by coating or laminating or a method in which hydrophilicity of the film surface is improved by corona discharge treatment or the like. By using, as the carrier, a metal drum, a steel belt, a polyester film or the like whose surface has been subjected to sand matting treatment or embossing treatment to form irregularities on the surface, the irregularities of the surface of the carrier are transferred onto the surface of the resulting film, whereby the film having a light diffusion function can be produced. As a matter of course, by directly subjecting the film to sand matting treatment, the film can be imparted with the light diffusion function.

In the drying (solvent removal) step of the solvent casting method, drying is not specifically restricted and can be carried out by a drying method generally used, such as a method in which the carrier with the liquid layer is passed through a drying oven by means of a large number of rollers. However, if bubbles are produced with evaporation of the

solvent in the drying step, properties of the resulting film are markedly deteriorated, and in order to avoid this, it is preferable to divide drying into plural (two or more) steps and to control the temperature or the air flow in each step.

The amount of the residual solvent in the optical film is usually not more than 10% by weight, preferably not more than 5% by weight, more preferably not more than 2% by weight, particularly preferably not more than 1% by weight. If the amount of the residual solvent in the film is more than 10% by weight, dimensional change of the optical film with time becomes large in the practical use of the optical film, so that such an amount is undesirable. Moreover, because of the residual solvent, Tg is lowered, and heat resistance is also lowered, so that such an amount is undesirable.

In order to favorably carry out the later-described stretching, the amount of the residual solvent sometimes needs to be controlled in the above range.

More specifically, in order that the film may be made to stably and uniformly exhibit retardation by stretch orientation, the amount of the residual solvent is desired to be in the range of usually 10 to 0.1% by weight, preferably 5 to 0.1% by weight, more preferably 1 to 0.1% by weight. By allowing a slight amount of the solvent to remain in the film, stretch orientation sometimes becomes easy, or control of retardation sometimes becomes easy.

The optical film of the invention has a thickness of usually 0.1 to 3,000 μm, preferably 0.1 to 1,000 μm, more preferably 1 to 500 μm, most preferably 5 to 300 μm. In case of the thickness of less than 0.1 μm, handling of the film becomes substantially difficult. In case of the thickness of more than 3,000 μm, it sometimes becomes difficult to wind up the film into a roll.

When the optical film of the invention is an unstretched film, the thickness distribution of the optical film is in the range of usually ±20%, preferably ±10%, more preferably ±5%, particularly preferably ±3%, based on the mean value. The coefficient of variation of the thickness based on 1 cm is usually not more than 10%, preferably not more than 5%, more preferably not more than 1%, particularly preferably not more than 0.5%. By controlling the thickness in the above manner, the obtainable optical film is uniform, and when the film is stretch-oriented, occurrence of retardation unevenness of a transmitted light can be prevented.

## Retardation film

It is also preferable that the optical film of the invention is a film exhibiting retardation (retardation film), which is obtained by stretching (stretch-orienting) the unstretched optical film.

By the stretching, molecular chains of the polymer that forms the film are regularly oriented in a given direction, whereby a function of giving retardation to a transmitted light is exhibited. The expression "regularly oriented" used herein means that molecular chains of the high-molecular compound are regularly oriented in the monoaxial direction or the biaxial directions of the film plane or in the thickness direction of the film, while in the case where a usual high-molecular compound (polymer) is formed into a film by melt extrusion, casting or the like, molecular chains of the high-molecular compound are not arranged in a specific direction but are at random though it depends upon a magnitude of film strain produced in the forming process. The degrees of regularity of the orientation of the high-molecular compound are various and can be controlled by the stretching conditions.

As the stretching method, there can be specifically mentioned a monoaxial stretching method or a biaxial stretching method publicly known. That is to say, there can be mentioned crosswise monoaxial stretching by tentering, compression stretching between rolls, lengthwise monoaxial stretching using two pairs of rolls having different circumferences, biaxial stretching combining crosswise monoaxial stretching with lengthwise monoaxial stretching, stretching by inflation, or the like.

In the case of the monoaxial stretching method, the stretching rate is in the range of usually 1 to 5,000%/min, preferably 50 to 1,000%/min, more preferably 100 to 1,000%/min, particularly preferably 100 to 500%/min.

The biaxial stretching method may be such that the film is stretched in two directions intersecting each other at the same time or such that the film is stretched monoaxially and then stretched in a direction different from the initial stretching direction. In these methods, the intersecting angle between the two stretching axes is not specifically restricted because it is determined according to the desired properties, but it is usually in the range of 120 to 60 degrees. The stretching rates in the stretching directions may be the same or different and are each in the range of usually 1 to 5,000%/min, preferably 50 to 1,000%/min, more preferably 100 to 1,000%/min, particularly preferably 100 to 500%/min.

The temperature for the stretching is not specifically restricted. However, when the glass transition temperature of the optical film (thermoplastic resin composition) used is represented by Tg, the stretching temperature is desired to be in the range of usually not lower than Tg and not higher than Tg+30°C, preferably not lower than Tg and not higher than Tg+20°C, more preferably not lower than Tg and not higher than Tg+10°C. When the stretching temperature is in the above range, large retardation can be exhibited, occurrence of retardation unevenness can be inhibited, and control of index ellipsoid can be easily made, so that such a temperature is favorable.

The stretch ratio is not specifically restricted because it is determined according to various properties such as desired retardation. However, the stretch ratio is in the range of usually 1.01 to 10 times, preferably 1.03 to 5 times, more preferably 1.03 to 3 times.

In the case of the thermoplastic resin composition of the invention, stretching can be carried out at a temperature in the vicinity of Tg, so that it is possible to apply high stress to the film even if stretching is carried out in a low stretch ratio, and large retardation can be obtained. When the stretch ratio is relatively low as described above, a retardation film having transparency and free from deviation of optical axis can be readily produced. If the stretch ratio is too high, control of retardation or optical axis sometimes becomes difficult.

Although the film having been stretched in the above manner may be cooled as it is at room temperature, it is desirable that the film is held at about a temperature of not lower than Tg-100°C and not higher than Tg for at least 10 seconds, preferably 30 seconds to 60 minutes, more preferably 1 minute to 60 minutes, to perform heat setting and then cooled down to room temperature. The resulting retardation film suffers small change of retardation of a transmitted light with time and has stable retardation properties.

In the retardation film obtained as above, molecules are oriented by stretching, and thereby, retardation is given to a transmitted light. The absolute value of the retardation can be controlled by controlling the stretch ratio, the film thickness before stretching, etc. For example, even if films have the same thickness as each other before stretching, a film having a higher stretch ratio tends to provide a larger absolute value of retardation of a transmitted light. Therefore, by changing the stretch ratio, the retardation film can give desired retardation to a transmitted light. Further, even if films have the same stretch ratio as each other, a film having a larger thickness before stretching tends to provide a larger absolute value of retardation of a transmitted light. Therefore, by changing the film thickness before stretching, the retardation film can give desired retardation to a transmitted light.

The value of retardation given to a transmitted light by the retardation film obtained as above is determined according to the use application and is not determined fixedly. However, when the retardation film is used for a liquid crystal display device, an electroluminescence display device or a wave plate of laser optical system, the retardation value is in the range of usually 1 to 10,000 nm, preferably 10 to 2,000 nm, more preferably 15 to 1,000 nm.

The retardation of a light transmitted by the film is preferably highly uniform, and specifically, the dispersion at a wavelength of 550 nm is desired to be in the range of usually ±20%, preferably ±10%, more preferably ±5%. If the dispersion of retardation is out of the range of ±20%, a liquid crystal display device using the film suffers color unevenness, and there sometimes occurs a problem that the performance of the display main body is lowered.

Further, the retardation of a light transmitted by the film depends upon the wavelength of the transmitted light. The retardation film of the invention preferably has positive wavelength dispersion properties. Specifically, when retardation values at wavelengths of 400 nm, 550 nm and 800 nm are represented by $Re_{400}$, $Re_{550}$ and $Re_{800}$, respectively, they desirably have a relationship of $Re_{400}<Re_{550}<Re_{800}$. Further, the ratio ($Re_{400}/Re_{550}$) of a retardation ($Re_{400}$) at a wavelength of 400 nm to a retardation ($Re_{550}$) at a wavelength of 550 nm is desired to be in the range of 1.0 to 0.1, preferably 0.9 to 0.3, more preferably 0.9 to 0.5, and the ratio ($Re_{800}/Re_{550}$) of a retardation ($Re_{800}$) at a wavelength of 800 nm to a retardation ($Re_{550}$) at a wavelength of 550 nm is desired to be in the range of 1.5 to 1.0, preferably 1.5 to 1.1, more preferably 1.5 to 1.2. In the case of a retardation film satisfying such conditions, if a retardation at a certain wavelength $\lambda$ is represented by $Re(\lambda)$, the value of $Re(\lambda)/\lambda$ can be made almost constant in the whole wavelength region of 400 to 800 nm.

By controlling the value of $Re(\lambda)/\lambda$ to a value in the range of ±30%, preferably ±20%, more preferably ±10%, based on the mean value, in the whole wavelength region of 400 to 800 nm, the obtainable $\lambda$ plate of the wide band exhibits a retardation of $1/4\lambda$ or $1/2\lambda$ in the whole wavelength region of 400 to 800 nm. That is to say, in the case where the value of $Re(\lambda)/\lambda$ is 0.15 to 0.40, preferably 0.16 to 0.35, more preferably 0.16 to 0.30, in the whole wavelength region of 400 to 800 nm, the film has a function of a $1/4\lambda$ plate that converts a circularly polarized light and a linearly polarized light to each other in the whole wavelength region of 400 to 800 nm. In the case where the value of $Re(\lambda)/\lambda$ is 0.35 to 0.65, preferably 0.45 to 0.60, more preferably 0.45 to 0.55, the film has a function of a $1/2\lambda$ plate that rotates a plane of polarization of a linearly polarized light by 90 degrees in the whole wavelength region of 400 to 800 nm. Therefore, the film is extremely useful.

The optical film of the invention such as the retardation film can be used as a single film or a laminate of two or more films, or can be used by laminating the film onto a transparent substrate. Further, the optical film can be used also by laminating it onto another film, sheet or substrate.

For lamination of the optical film, an adhesive or a bonding material is employable. As the adhesive or the bonding material, one having excellent transparency is preferably used. Examples of such adhesives or bonding materials include adhesives, such as natural rubbers, synthetic rubbers, a vinyl acetate/vinyl chloride copolymer, polyvinyl ether, acrylic resins and modified polyolefin-based resins; curing type adhesives obtained by adding a curing agent, such as an isocyanate group-containing compound, to the above resins having a functional group such as a hydroxyl group or an amino group; polyurethane-based bonding materials for dry laminate; synthetic rubber-based bonding materials; and epoxy-based bonding materials.

In order to enhance workability in laminating the film onto another film, sheet or substrate, an adhesive layer or a bonding material layer may be laminated in advance onto the retardation film. In the case where the adhesive layer or the bonding material layer is laminated, the aforesaid adhesive or bonding material is employable as the adhesive or

the bonding material.

The optical film and the retardation film of the invention can be used for various liquid crystal display devices, such as cell phones, digital information terminals, pocket bells, navigation systems, on-vehicle liquid crystal displays, liquid crystal monitors, dimmer panels, displays for OA machines and displays for AV machines, antireflection plates or touch panels of electroluminescence display system, etc. Moreover, they are useful as wave plates used for recording/reproducing apparatuses for optical discs, such as CD, CD-R, MD, MO and DVD.

## EXAMPLES

The present invention is further described with reference to the following examples, but it should be construed that the invention is in no way limited to those examples. In the following examples and comparative examples, the terms "part(s)" and "%" mean "part(s) by weight" and "% by weight", respectively, unless otherwise noted. In the following examples and comparative examples, further, various measurements and evaluation were made in the following manner.

### Molecular weight measurement (Mw, Mw/Mn)

Using a gel permeation chromatograph (GPC, manufactured by Tosoh Corporation, trade name: HLC-8020; 4 columns: manufactured by Tosoh Corporation, trade name: TSK gel G7000HxL, TSK gel GMHxL, TSK gel GMHxL, TSK gel G2000xL) and using tetrahydrofuran (THF) as a solvent, the weight-average molecular weight (Mw) in terms of polystyrene and the molecular weight distribution (Mw/Mn) were measured. The Mn means a number-average molecular weight.

### Glass transition temperature (Tg)

Using a differential scanning calorimeter (DSC) manufactured by Seiko Instruments Inc., the glass transition temperature was measured in a stream of nitrogen at a heating rate of 20°C/min. A temperature at the intersecting point between a tangent to the DSC curve at the peak temperature of the resulting time derivative DSC curve (DDSC curve) and a tangent to the DSC curve at a temperature of the peak temperature - 20°C of the DDSC curve was determined as Tg. In Fig. 1, the schematic view relating to the Tg calculation method is shown.

### Amount of residual solvent

A sample was dissolved in methylene chloride, and the resulting solution was analyzed by the use of a GC-7A gas chromatography apparatus manufactured by Shimadzu Corporation.

### Total light transmittance, haze

The total light transmittance and the haze were measured by the use of a haze meter HGM-2DP model manufactured by Suga Test Instrument Co., Ltd.

### Retardation of transmitted light and wavelength dispersion

Using a tensile tester equipped with a constant temperature bath (Instron Corporation, MODEL 5567), the resulting film was held at a temperature of its glass transition temperature + 10°C for 5 minutes and then monoaxially stretched. The stretching was carried out in a stretch ratio of twice. Using the resulting oriented film, retardation of a transmitted light was measured by means of KOBRA-21ADH and KOBRA-CCD manufactured by Oji Scientific Instruments.

### Synthesis Example 1

In a reaction vessel purged with nitrogen, 20 g of 8-methoxycarbonyl-8-methyltetracyclo $[4.4.0.1^{2,5}.1^{7,10}]$-3-dodecene represented by the following formula (A), 5.0 g of 5-methoxycarbonyl-5-methylbicyclo[2.2.1]hept-2-ene represented by the following formula (B), 1.2 g of 1-hexene as a molecular weight modifier and 86.3 g of toluene were placed, and they were heated to 80°C. Then, 0.15 ml of a toluene solution of triethylaluminum (0.61 mol/1) and 0.47 ml of a toluene solution of methanol-modified $WCl_6$ (0.025 mol/1) were added, and reaction was performed at 80°C for 3 hours to give a polymer. Subsequently, the resulting ring-opened copolymer solution was placed in an autoclave, and 86.3 g of toluene was further added. Then, RuHCl (CO) $[P(C_6H_5)]_3$ as a hydrogenation catalyst was added in an amount of 2500 ppm based on the amount of the monomers charged, and the hydrogen gas pressure was adjusted to 9 to 10

MPa, followed by reaction at 160 to 165°C for 3 hours. After the reaction was completed, the reaction product was precipitated in a large amount of a methanol solution to give a hydrogenation product. The resulting hydrogenation product (resin (A1)) of the ring-opened polymer had Tg of 147°C, a weight-average molecular weight (Mw) of $11.5\times10^4$ and a molecular weight distribution (Mw/Mn) of 3.21.

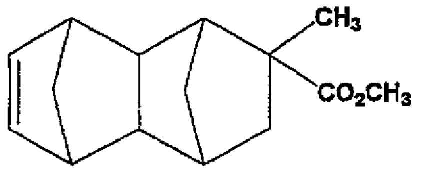

(A)

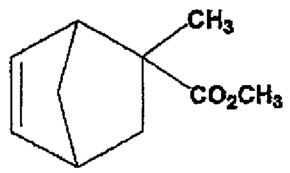

(B)

Synthesis Example 2

In a reaction vessel purged with nitrogen, 50 g of 8-methoxycarbonyl-8-methyltetracyclo[4.4.0.$1^{2,5}$.$1^{7,10}$]-3-dodecene represented by the above formula (A), 2.3 g of 1-hexene as a molecular weight modifier and 100 g of toluene were placed, and they were heated to 80°C. Then, 0.09 ml of a toluene solution of triethylaluminum (0.6 mol/1) and 0.29 ml of a toluene solution of methanol-modified $WCl_6$ (0.025 mol/1) were added, and reaction was performed at 80°C for 3 hours to give a polymer. Subsequently, the resulting ring-opened copolymer solution was placed in an autoclave, and 100 g of toluene was further added. Then, RuHCl (CO) $[P(C_6H_5)]_3$ as a hydrogenation catalyst was added in an amount of 2500 ppm based on the amount of the monomers charged, and the hydrogen gas pressure was adjusted to 9 to 10 MPa, followed by reaction at 160 to 165°C for 3 hours. After the reaction was completed, the reaction product was precipitated in a large amount of a methanol solution to give a hydrogenation product. The resulting hydrogenation product (resin (A2)) of the ring-opened polymer had Tg of 167°C, a weight-average molecular weight (Mw) of $13.49\times10^4$ and a molecular weight distribution (Mw/Mn) of 3.06.

Synthesis Example 3

In a reaction vessel, 101 ml of styrene, 4.5 g of α-methyl-p-hydroxystyrene, 5.0 ml of acrylonitrile and 0.6131 g of 2,2'-azobis(2,4-dimethylvaleronitrile) (Wako reagent: V-65) were placed. A stream of nitrogen was bubbled for 10 minutes, and then reaction was performed at 55°C for 7 hours. After the reaction was completed, the reaction product was reprecipitated in a large amount of methanol to give a styrene/α-methyl-p-hydroxystyrene/acrylonitrile copolymer. The resulting vinyl-based polymer (resin (B1)) had Tg of 110°C, a weight-average molecular weight (Mw) of $7.27\times10^4$ and a molecular weight distribution (Mw/Mn) of 1.81.

Example 1

The resin (A1) obtained in Synthesis Example 1 and the resin (B1) obtained in Synthesis Example 3 were dissolved in a ratio of 67 parts by weight/33 parts by weight in methylene chloride to prepare a solution having a solids concentration of 20% by weight. The solution was subjected to solution casting to give a transparent cast film (PF1) having a thickness of 90 μm and a solvent residue of not more than 0.2%. The glass transition temperature (Tg) of the resulting film measured was 129°C, and the measured peak was a single peak, so that the polymers proved to be compatibilized with each other. Further, a total light transmittance and a haze were measured. The results are set forth in Table 1.

Example 2, Comparative Examples 1 and 2

Cast films were obtained in the same manner as in Example 1, except that resins whose types and mixing ratios are shown in Table 1 were used. Appearance of the resulting films was observed, and further, Tg, film thickness, total light transmittance and haze of the films were measured. The results are all set forth in Table 1.

The resin (B2) was a styrene/maleic anhydride copolymer (available from NOVA Chemicals, Dylark D232) and had Tg of 118°C, a weight-average molecular weight (Mw) of $20.74\times10^4$ and a molecular weight distribution (Mw/Mn) of 1.99.

Table 1

Table 1

| | Ex. 1 | Ex. 2 | Comp. Ex. 1 | Comp. Ex. 2 |
|---|---|---|---|---|
| Type of the Film | PF-1 | PF-2 | PF-3 | PF-4 |
| Type of the Resin Blend | A1/B1 | A1/B2 | A2/B1 | A2/B2 |
| Tg of Resin Components (°C) <Difference in Tg (°C)> | 147/110 <37> | 147/118 <29> | 170/110 <60> | 170/118 <52> |
| Tg of the Composition (°C) | 129 | 131 | 136 | 135 |
| Total Light Transmittance (%) | 92.4 | 92.4 | 92.4 | 92.4 |
| Haze (%) | 0.9 | 1.2 | 0.9 | 0.9 |
| Thickness of the Film (μm) | 90 | 110 | 100 | 119 |
| Appearance | Transparent | Transparent | Transparent | Transparent |

Examples 3 and 4, Comparative Example 2

The films obtained in Examples 1 and 2 and Comparative Example 1 were each subjected to stretching to obtain two kinds of oriented films having different stretch ratios, and the resulting films were evaluated. The results are set forth in Table 2. Further, comparison of stress with development of retardation in the stretching between the resulting retardation films is shown in Fig. 2. As is apparent from Table 2 and Fig. 2, the films of the invention can be improved in the development of retardation at a low stress with maintaining wavelength dispersion properties.

Table 2

Table 2

| | | Ex. 3 | | Ex. 4 | | Comp. Ex. 2 | |
|---|---|---|---|---|---|---|---|
| Type of the Film | | PR-1 | PR-2 | PR-3 | PR-4 | PR-5 | PR-6 |
| Stretching Temperature (°C, Tg+$\alpha$°C) | | 139 (10) | 139 (10) | 136 (5) | 136 (5) | 146 (10) | 146 (10) |
| Stretch Ratio (times) | | 1.53 | 2.15 | 1.49 | 1.93 | 1.58 | 2.07 |
| Stress in Stretching (kg/cm$^3$) | | 22 | 27 | 18 | 21 | 31 | 42 |
| Normalized Retardation Value of Transmitted Light (Re/d, $\times 10^{-4}$) | 400nm | 8.51 | 16.67 | 5.91 | 9.78 | 12.15 | 20.10 |
| | 550nm | 8.53 | 16.98 | 6.38 | 11.4 | 12.15 | 20.23 |
| | 800nm | 8.81 | 17.47 | 7.23 | 12.2 | 12.53 | 20.80 |
| Wavelength Dispersion of Retardation (Re/$Re_{550}$) | 450nm | 0.998 | 0.983 | 0.926 | 0.858 | 1.000 | 0.994 |
| | 550nm | 1.000 | 1.000 | 1.000 | 1.000 | 1.000 | 1.000 |
| | 800nm | 1.033 | 1.030 | 1.058 | 1.070 | 1.032 | 1.029 |

Re: Retardation (nm), d: Thickness of the Film (μm)

Example 5

In order to evaluate properties of the oriented film (PR-4) shown in Example 4 which had been made to exhibit retardation (Re) at 137 to 140 nm by monoaxial stretching, a polarizing plate and a retardation film attached onto a front face of a liquid crystal panel on the observer's side of a liquid crystal TV apparatus (LC-13B1-S, manufactured by Sharp Corporation) adopting an ASV system low-reflection black TFT liquid crystal were peeled off, and then the polarizing plate thus peeled and the oriented film (PR-4) obtained in the example were attached on the side of the liquid crystal cell in such a manner that the transmission axis of the polarizing plate newly attached and the transmission axis of the polarizing plate originally attached to the peeled position should become the same as each other.

It could be confirmed that the liquid crystal TV apparatus having the oriented film (PR-4) suffered little coloring in the black display as viewed from an azimuth angle of 45 degrees and a pole angle of 60 degrees and had excellent contrast. Consequently, visibility was excellent.

Comparative Example 3

The procedure of Example 5 was repeated except that a TAC (triacetylcellulose) oriented film (retardation (Re): 137 to 140 nm) was attached instead of the oriented film (PR-4) shown in Example 4. As a result, coloring in the black display as viewed from an azimuth angle of 45 degrees and a pole angle of 60 degrees was confirmed, and lowering of contrast was also confirmed.

INDUSTRIAL APPLICABILITY

The thermoplastic resin composition of the invention can be used for various plastics and can be used particularly for electron/optical materials, such as optical discs, optical lenses, optical fibers, transparent plastic substrates, low dielectric materials, retardation films, protective films of polarizing plates and substrates for liquid crystal displays, sealing materials for optical semiconductor sealing, medical appliances, electrical insulating materials, and packaging materials. The optical film and the retardation film of the invention can be used for various liquid crystal display devices, such as cell phones, digital information terminals, pocket bells, navigation systems, on-vehicle liquid crystal displays, liquid crystal monitors, dimmer panels, displays for OA machines and displays for AV machines, antireflection plates or touch panels of electroluminescence display system, etc. Moreover, they are useful as wave plates used for recording/reproducing apparatuses for optical discs, such as CD, CD-R, MD, MO and DVD.

**Claims**

1. A thermoplastic resin composition comprising (A) a cycloolefin-based polymer and (B) a vinyl-based polymer having a polar group, having a glass transition temperature of not lower than 100°C and having a difference in glass transition temperature between the polymers (A) and (B) of less than 50°C.

2. The thermoplastic resin composition as claimed in claim 1, wherein the vinyl-based polymer (B) having a polar group is contained in an amount of 20 to 200 parts by weight based on 100 parts by weight of the cycloolefin-based polymer (A).

3. The thermoplastic resin composition as claimed in claim 1 or 2, wherein the cycloolefin-based polymer (A) is a polymer obtained by polymerization or copolymerization of the compound represented by the following formula (I):

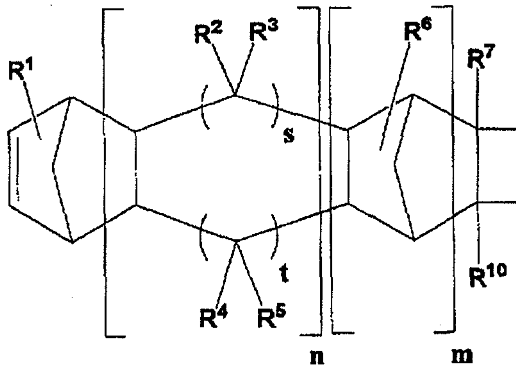

(I)

wherein m, n, s and t are each independently an integer of 0 to 2,
$R^1$, $R^2$, $R^3$, $R^4$, $R^5$ and $R^6$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group,
$R^7$, $R^8$, $R^9$ and $R^{10}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, they may be bonded to each other to form a monocyclic or polycyclic group which may have a hetero atom, and $R^7$ and $R^8$, or $R^9$ and $R^{10}$ may be united to form a divalent hydrocarbon group.

4. The thermoplastic resin composition as claimed in any one of claims 1 to 3, wherein the cycloolefin-based polymer (A) has a structural unit represented by the following formula (II):

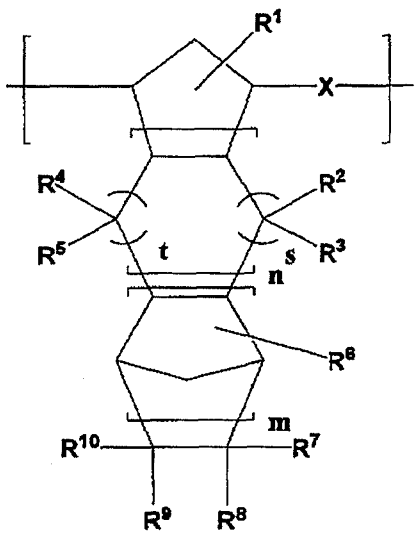

(II)

wherein $R^1$ $R^2$ $R^3$ $R^4$ $R^5$ $R^6$ $R^7$ $R^8$ $R^9$ $R^{10}$ m, n, s and t have the same meanings as in the formula (I), X is a group represented by the formula -CH=CH- or a group represented by the formula $-CH_2CH_2-$, and plural X may be the same or different.

5. The thermoplastic resin composition as claimed in any one of claims 1 to 4, wherein the vinyl-based polymer (B) having a polar group has, as the polar group, at least one group selected from a hydroxyl group and an acid anhydride group.

6. The thermoplastic resin composition as claimed in any one of claims 1 to 5, wherein the vinyl-based polymer (B) having a polar group has a structural unit derived from an aromatic vinyl-based monomer.

**7.** An optical film comprising a thermoplastic resin composition which comprises (A) a cycloolefin-based polymer and (B) a vinyl-based polymer having a polar group, has a glass transition temperature of not lower than 100°C and has a difference in glass transition temperature between the polymers (A) and (B) of less than 50°C.

**8.** The optical film as claimed in claim 7, which is a retardation film obtained by forming the thermoplastic resin composition into a film and stretch-orienting the film.

**9.** A polarizing plate using the optical film of claim 8 and a liquid crystal display device using the polarizing plate.

Fig. 1

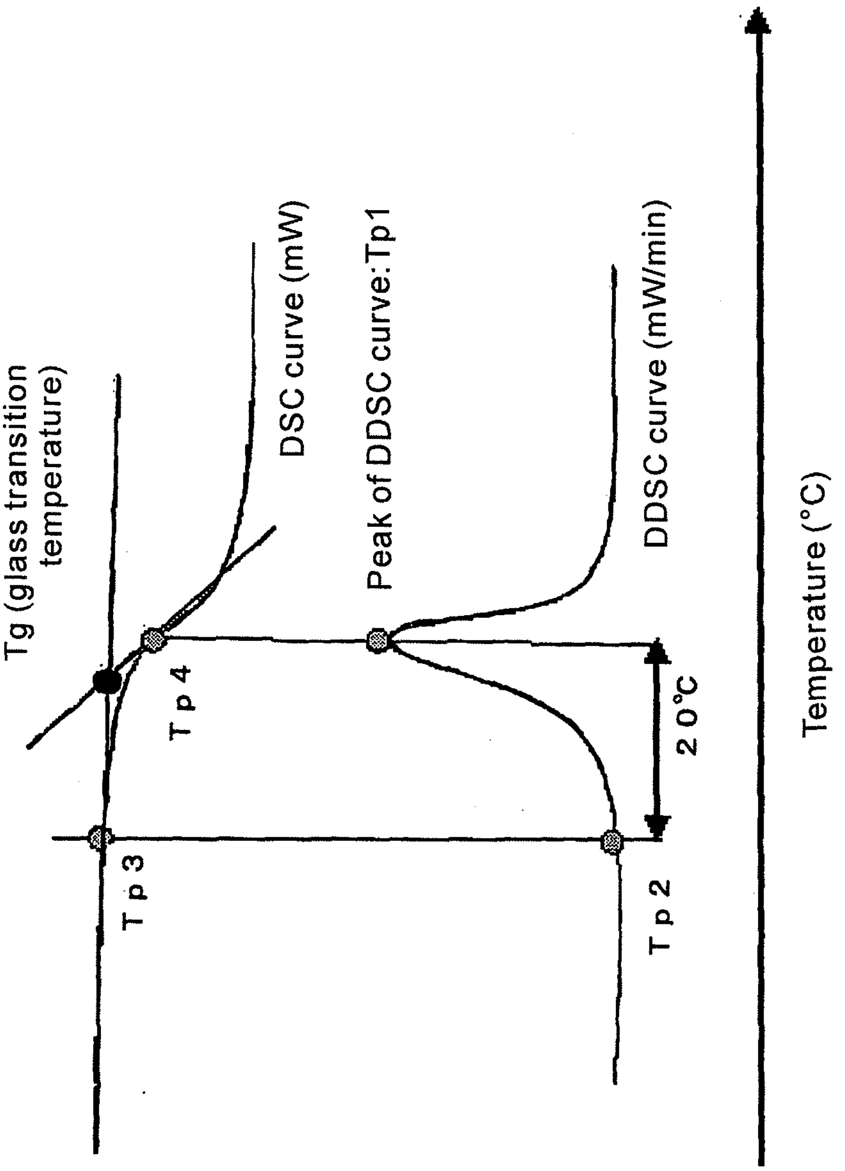
Tg (glass transition temperature)
DSC curve (mW)
Peak of DDSC curve:Tp1
DDSC curve (mW/min)
Tp 4
Tp 3
Tp 2
20°C
Temperature (°C)

Fig. 2

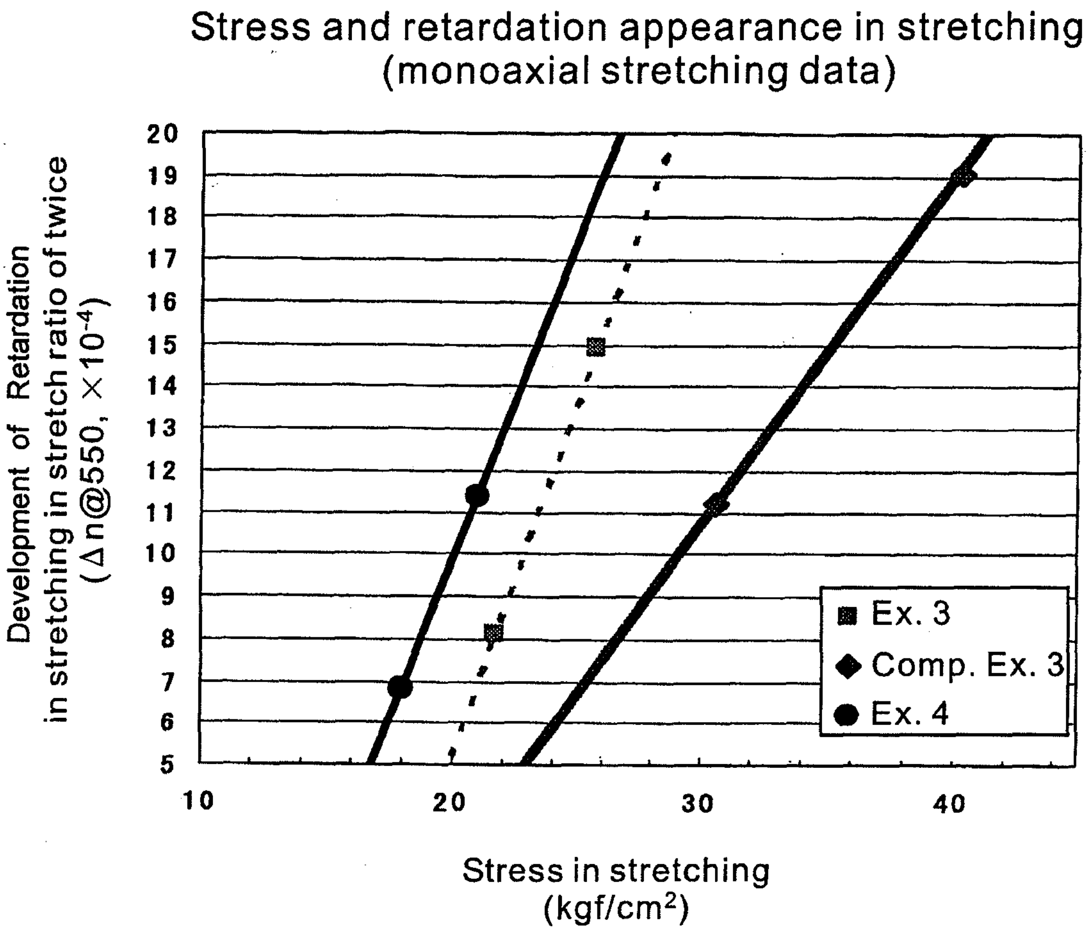
Stress and retardation appearance in stretching
(monoaxial stretching data)
Development of Retardation
in stretching in stretch ratio of twice
(Δn@550, ×10-4)
20
19
18
17
16
15
14
13
12
11
10
9
8
7
6
5
10
20
30
40
Ex. 3
Comp. Ex. 3
Ex. 4
Stress in stretching
(kgf/cm2)

**INTERNATIONAL SEARCH REPORT**

International application No.
PCT/JP2005/023604

A. CLASSIFICATION OF SUBJECT MATTER
***C08L65/00***(2006.01), ***C08L57/06***(2006.01), ***G02B5/30***(2006.01), ***G02F1/13363***
(2006.01)

According to International Patent Classification (IPC) or to both national classification and IPC

B. FIELDS SEARCHED

Minimum documentation searched (classification system followed by classification symbols)
C08L23/00-101/16, C08K3/00-13/08, G02B5/30, G02F1/13363

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2002-146204 A (Teijin Kasei Kabushiki Kaisha),<br>22 May, 2002 (22.05.02),<br>Claims; Par. Nos. [0041], [0125]<br>(Family: none) | 1-4,6<br>5,7-9 |
| P,A | JP 2005-8698 A (JSR Corp.),<br>13 January, 2005 (13.01.05),<br>Full text<br>(Family: none) | 1-9 |
| A | JP 2002-194170 A (Hitachi Chemical Co., Ltd.),<br>10 July, 2002 (10.07.02),<br>Full text<br>(Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 January, 2006 (19.01.06) | 31 January, 2006 (31.01.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2005/023604

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-350025 A (JSR Corp.),<br>21 December, 2001 (21.12.01),<br>Full text<br>(Family: none) | 1-9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000137116 A
- JP 2001337222 A
- JP 1240517 A


### Non-patent literature cited in the description


- *Japanese Journal of Polymer Science and Technology,* 2004, vol. 61 (1), 89-94
- Olefin Metathesis and Metathesis Polymerization. **K.J. IVIN.** J.C. MOL. Academic Press, 1997